# EUROPEAN PATENT APPLICATION

(11) **EP 1 770 152 A1**
(43) Date of publication of application: **04.04.2007**
(21) Application number: 05021213.3
(22) Date of filing: 28.09.2005
(51) Int. Cl.: C10L 5/44

(54) **Method and device for pelletizing unprocessed sugar-cane bagasse**

(71) Applicant: Cargill, Inc., Minneapolis MN 55440-5624 (US)
(72) Inventor: Lana, Pedro Ludovico, Campinas, Sao Paulo (BR); Curran, Michael, 74140 Yvoire (FR)
(74) Representative: Goddar, Heinz J.

(57) **Abstract**

The present invention relates to a method and a device for pelletizing unprocessed sugar-cane bagasse on an industrial scale, and in particular to the use of said unprocessed sugar-cane bagasse pellets as a combustible fuel product.

## Description

The present invention relates to a method and a device for pelletizing unprocessed sugar-cane bagasse on an industrial scale, and in particular to the use of said unprocessed sugar-cane bagasse pellets as a combustible fuel product.

### BACKGROUND OF THE INVENTION

Since fossil fuel has become a finite energy source, in the last decades many efforts have been put into the production of alternative energy materials. These alternative materials should not only be affordable and readily available, they also should be preferably derived from renewable sources. Among the existing renewable alternatives to fossil fuels, biomass has raised great interest. Wood or wood by-products are prime examples of renewable energy materials when used for the production of fuel briquettes or pellets. The main source of firewood has been found in native forests, mainly the atlantic rain forests and the cerrados in Brazil. It is simple to imagine that these sources are also finite sources, and that an increase of wood fuel consumption would not only lead to an increase in the price of these raw materials but also to the loss of many forests since a tree needs a long growth period, which decreases the desirability of wood as a renewable energy source.

As an alternative to wood-based products, other agriculture materials, such as sugar-cane, have been investigated. Sugar-cane (*Saccharum officinarum*) belongs to the family of grasses (*Poaceae*). It is a tall grass which is native in warm temperate to tropical regions of the world. There are 13 million hectares of sugar-cane plantations worldwide, and Brazil is one of the major growers of sugar-cane. In Brazil, sugar-cane is currently used to produce sugar as well as to provide the alcohol used in making gasohol and bio-diesel fuels.

Sugar from freshly harvested sugar-cane is extracted by sugar-cane mills, mostly located in sugar-cane producing regions. In a sugar mill, sugar-cane is washed, chopped and shredded, then the shredded cane is repeatedly mixed with water and crushed between rollers to collect juices containing 10 - 15% sucrose. The remaining fibrous waste is commonly known as bagasse, and is currently used on-site in sugar mills as a fuel, by feeding the bagasse into the boilers to generate steam and power. In this way, bagasse makes a sugar mill more than self-sufficient in energy. The surplus bagasse can also be used for animal feed, in paper manufacture, or burned to generate electricity for the local power grid.

After extracting sugar from the fibrous residues, the bagasse moisture content can vary considerably, containing up to 50% water. However in this state, the bagasse cannot be transported elsewhere as a fuel due to the low calorific value (8-9 Giga Joules per metric ton), and transporting issues.

Therefore, it would be useful to convert the bagasse into a compact transportable fuel, which can be achieved by drying and pelletizing. In addition, the resulting pellets can be blended with coal in an effort to reduce emissions in coal-fired power stations.

US 4,363,636 (WO 83/01457 A1) (BR 8207930) describes bagasse as a source of energy that is increased by a flexible operation adapted to the power requirements, fuel storage requirements and other variables of a sugar mill operation. Part or all of a primary stream of bagasse from the sugar mill is dried from its initial moisture content, e.g. in the order of 50%, to a lower moisture content of about 25-40% using a portion of the hot flue gases from the boilers which are used to supply power for the sugar mill operation. The resulting drier material is separated to provide an oversize particle stream which may be sent directly to the boiler for burning, to storage in the bagasse house, or to a secondary drying operation, and a secondary stream of fine particle size bagasse components which are most suitable for further processing and densification. This secondary stream, with optional addition of oversize particles from the primary drying operation, is then dried in contact with another portion of hot flue gases to a moisture content suitable for densification, about 6-12% where a pellet mill is employed, and is further subjected to particle size selection, if necessary, and then subjected to densification in a pellet mill or other suitable equipment. The densified material is then sent to storage, returned to the boilers for part or all of the fuel requirement or transported to other potential users.

MU 6801860 U describes a sugar cane bagasse dryer intended to eliminate the low effectiveness of burning the wet bagasse, as it comes from compression. This arrangement basically comprises a diffuser that holds a carrier mat with the crushed sugar cane bagasse. Such carrier mat is provided with a flow channel to drain the liquid from the bagasse. Such bagasse is inserted in the upper portion of a drying column and leaves dry in the lower portion due to heated air provided by the furnace.

BR 8801542 also describes a dryer for solid bagasse, i.e. sugar cane bagasse, without jeopardizing the necessary thermal power used as direct heat source, cut cane straw and/or foliage in general.

BR 8100104 describes a cyclone, a dryer operative under the simultaneous principle of pneumatic heat and mass, a separator cyclone and pelletizer, and using the fluid from solid fuel burn called "BIOCOM" as drying agent, generating vapour to cook the product, which is rich in nutritive substances. Similarly, BR 8100102 describes a process for obtaining a dry and solid fuel with high heat power from sugar cane bagasse and its plant which includes a bagasse dryer operating under the heat transference principle and pneumatic mass, followed by a separator cyclone and a agglomerated and continuous presser, working as dryer agent, the fluid being originated from the burning of fuel obtained in a furnace, the final product being dry and compact, such product being able to be economically stored and carried, without the difficulties of the original product.

BR 8102291 describes a process to increase the apparent specific heat power of sugar cane bagasse and its available energy, inside or outside the sugar factory. This process makes use of the wasted heat or the heat wrongly used in sugar cane and alcohol factories by drying or dehydrating the bagasse, increasing its lower heat power (Kcal/Kg). This causes a great excess of bagasse, which will be packaged in the adequate grain measure and compacted to obtain a greater heat concentration, in order to facilitate its transport or storage to be used as alternative energy and/or animal food and similar.

US 4,326,470 describes an individual bagasse drier that realizes a system of utilization of the chimney gases to decrease the moisture of the bagasse left from the mill in 10 or 15 points, increasing the steam production between 13.5 % to 15.45 % respectively. It consists of a drier for each furnace, and consumes 54 % of the power installed per ton of dry bagasse, in relation to the existing systems in the market.

In addition, US 4,613,339 describes a method for preparing and using a combustible fuel product using sweet sorghum. A sorghum variety high in sugar, high in biomass, and low in nitrogen is first processed to remove a majority of sugars therefrom. The remaining lignocellulosic residue, commonly known as bagasse, is converted into combustible pellets or alternatively stored for future pelletization. Storage is accomplished by first piling the bagasse on a hard surface. The bagasse is then compressed to form a compacted mass. Compression frees trapped air in the pile, hindering oxidative degradation by bacteria and other microorganisms.

So far, the operation technology of pelletization machinery and similar equipment, such as briquetters, are generally known to the person of skill in the art. However, their use with unprocessed sugar-cane bagasse had never been performed on an industrial scale without the use of the hot flue gases from the boilers. While the literature mentions the production of pellets from unprocessed sugar-cane bagasse, the manner in which this method is described is not feasible to solve the particular problems and needs that derive from the secure industrial production perspective.

Some basic studies involving pelletization in a lab environment have been carried out in Australia, showing that long-lasting pellets can be produced with 10% humidity, 60 - 100 °C, and eight-second compression time in the pelletization equipment at pressures of 80 to 320 kgf/cm², all of which led to a final product density between 450 kg to 600 kg of dry material per cubic meter. However, in all these tests production was way below the pelletizers' nominal capacity.

In regard to the phase involving the unprocessed sugar-cane bagasse, which is a key step to ensure sound method performance, it is essential to mention some experiments, wherein the unprocessed sugar-cane bagasse using the boiler exhaust gases in a counter-flow with the bagasse in suspension.

The pellet-production facilities Centro de Tecnologia Canavieira developed had a first model applied on an industrial scale next to a sugar mill. This model operated on-and-off during the 1982 crop and it basically produced hydrolyzed sugar-cane bagasse pellets for animal-feed applications. Another aspect analyzed was the high bagasse drying temperature, which rendered operations unsafe because of the fire risk. This technology also faced operational difficulties in relation to the air-bagasse counter-flow, mainly frequent clogging of the system.

It should be noted, that the pelletization method is basically the compressing of unprocessed sugar-cane bagasse, which has variable density and humidity. The raw material used in producing the pellets is unprocessed sugar-cane bagasse with following characteristics:

| | |
|---|---|
| Upper calorific content in damp state: | 2,150 kcal/kg |
| Lower calorific content: | 1,750 kcal/kg. |
| Density: | 0.13 kg/m³ |
| Humidity: | 50 % |

For comparison the average calorific content of some types of firewood are shown:

| | |
|---|---|
| Acacia mangium: | 4,619 kacl/kg. |
| Eucalyptus grandis: | 4,641 kcal/kg. |
| Alnus subcordata: | 4,700 kcal/kg. |
| Eucalyptus dunnii: | 4,732 kcal/kg. |

As already mentioned, bagasse has been used as a fuel and pelletized. However, for its use as nationally registered biofuel and to freight the pellets overseas the final pellets should have similar calorific content as the above mentioned firewood and a certain moisture.

Thus, among the existing renewable alternatives to fossil fuels, the biomass has raised the greatest interest. Since firewood found in native forests is a finite energy source, it is essential to replace the firewood biomass for unprocessed bagasse pellets. This invention refers to a secure continuous pelletization method on an industrial scale compressing unprocessed sugar-cane bagasse, using steam to dry during the spinning dryer. In addition, this method is environmentally clean and reuses all industrial rejects.

Moreover, this product will have the following additional advantages:
- The product is from 100% recycled origin and is environmentally friendly because it reduces deforestation.
- The product has a calorific charge similar to firewood.
- The product requires reduced storage capacity, thus enabling emergency and buffer stocks.
- It is a clean product without the drawbacks of firewood.
- The product's low humidity raises temperature quickly and the product releases less smoke, ashes and soot when compared to firewood.
- It has a more homogeneous calorific charge than firewood.
- It has a higher flame temperature.
- It causes less pollution because it is a renewable fuel.

### SUMMARY OF THE INVENTION

It is an object of the present invention to provide a method and a device on an industrial scale for pelletizing unprocessed sugar-cane bagasse in order to obtain pellets having the following preferable characteristics: Upper calorific content: about 4,500 to about 5,500 kcal/kg; lower calorific content: about 3,500 to about 4,500 kcal/kg; density: about 500 to about 600 kg dry matter/m³; and humidity: about 10 % to about 15 %.

Another object of this invention is to provide a method and a device for the production of unprocessed sugar-cane pellets, correcting the operational difficulties faced by the previous mentioned attempts on an industrial scale, e.g. the high bagasse drying temperature and therefore the high fire risk. One further object of this invention is to provide unprocessed sugar-cane bagasse pellets to be used in place of fossil fuels for steam-generation processes, hot-gas generators, and equipment that generates thermal energy. In line with this it is another object of this invention to provide unprocessed sugar-cane bagasse pellets transportable to regions, such as Europe or Japan with shortages of biomass of high calorific value, as a cleaner fuel with all the necessary specification, consistency and price requirements.

These and other objects and advantages of the present invention will become more readily apparent from the following detailed description.

### DESCRIPTION OF THE PREFFERRED EMBODIMENTS OF THE INVENTION

The present invention involves a method and a device on an industrial scale for pelletizing unprocessed sugar-cane bagasse in order to obtain pellets.

In a first aspect of the present invention, the object thereof is solved by providing a method for pelletizing unprocessed sugar-cane bagasse comprising:
(a) providing and feeding of unprocessed sugar-cane bagasse into said method,
(b) cleaning of said unprocessed sugar-cane bagasse,
(c) drying of said cleaned unprocessed sugar-cane bagasse,
(d) pelletization of said dried sugar-cane bagasse, and
(e) sorting and drying of said pelletized sugar-cane bagasse.

Preferably, the dried sugar-cane bagasse pellets are suitably stored in an additional step (f).

Preferably, in step (a) of the method of the present invention, unprocessed sugar-cane bagasse is continuously fed into the method while the bagasse is loosened and flattened.

In one embodiment of the method according to the present invention, unprocessed sugar-cane bagasse is fed in step (a) through a feed box (2) and loosened and flattened by a sprayer (3).

In a preferred embodiment of the method of the present invention said feed box can hold a 15-minute supply in relation to the plant output capacity.

In another preferred embodiment of the method of the present invention, said feed box has a cleated or similar type conveyor belt to transport the unprocessed sugar-cane bagasse.

In a particular preferred embodiment of the method of the present invention, said feed box comprises a rectangular flat-wall and a flat-bottom.

In one embodiment of the method of the present invention, in step (b) ferrous material and impurities of the unprocessed sugar-cane bagasse are removed. More preferably, said ferrous material is removed by an electromagnet (5), and any other impurities are removed by a di-stone (6).

In another preferred embodiment of the method according to the present invention, subsequently a fiber remover and a separator of coarse impurities are used.

In another preferred embodiment of the method of the present invention, said feeding conveyor belt is fitted with the said electromagnet (5) having a minimum magnetic capacity of about 1,500 gauss. This electromagnet is placed far enough above the conveyor belt so that it can remove ferrous material and does not halt the method and the pelletizer. This electromagnet is cleaned frequently to have removed any ferrous material attracted thereto.

In another particular preferred embodiment, said electromagnet is installed in the passage between conveyor belts, an area where the bagasse is moved considerably.

In a further particular preferred embodiment said di-stone (6) is a rotating machine consisting of 5 to 8 perpendicular axes with star-shaped knives that counter rotate.

In one embodiment of the method of the present invention, said unprocessed sugar-cane bagasse is dried using saturated steam in step (c).

In a preferred embodiment of the method according to the present invention, the cleaned unprocessed sugar-cane bagasse is transported by a cleated or similar type conveyor belt (7) to the spinning tube dryer (8) using a system of bundled tubes conveying saturated steam at about 8.34 bar to about 9.81 bar (8.5 to 10 kgf/cm²), at a temperature ranging from about 170 to about 185 °C inside the tube, providing indirect contact with the product in the tube's external wall (i.e. the steam inside the pipes dry without contact with the bagasse, whilst the steam flow heating the internal surface of the pipes and bagasse has contact with the external surface of the pipes). This results in temperatures ranging from about 135 to about 140 °C. Preferably, said sugar-cane bagasse starts to dry as soon as it gets in contact with the bundle of tubes.

In another preferred embodiment of the method of the present invention, said sugar-cane bagasse is dried from a moisture in the range of about 44 to about 55% to about 13 to about 20% in a drying step. Then, in one embodiment of the method according to the present invention, the dried sugar-cane bagasse having a humidity varying between about 13 to about 20 % is taken to the pelletizers by a cleated or similar type conveyor belt.

In another preferred embodiment of the method of the present invention, said spinning tube dryer is fitted with deflectors positioned at an angle of about 45 ° attached to the tube bundles, in order to increase efficiency in the transportation and drying of bagasse inside the dryer.

In a further embodiment of the method of the present invention, the minimum spacing between the tubes is about 75 mm, helping to prevent any bagasse accumulation inside the dryer, which eventually might lead to combustion.

In another preferred embodiment of the method of the present invention, in step (c) said unprocessed sugar-cane bagasse remains inside the spinning tube dryer for about 12 minutes, at about 4 rpm using about 2 to about 3 metric tons of steam per hour.

In a particular preferred embodiment of the method according to the present invention, after the bagasse leaves the tubular bundles, it is insufflated with hot air by a duct coming from a heat radiator (9) fed by saturated steam (VS). This operation heats the gases in counter flow with the bagasse, thus helping the drying method and preventing any accumulation of solid residues (powder) inside the dryer.

In another preferred embodiment of the method of the present invention, the hot and humid gases in step (c) are removed on the opposite side of the entrance of the dryer by a duct with forced exhaust (10), and sent to a cyclone, or similar equipment, where the solid particles (powder) are separated and sent to be burned by the boiler.

In one embodiment of the method according to the present invention, the dried sugar-cane bagasse having a humidity varying between about 13 to about 20 % is taken to the pelletizers by a cleated or similar type conveyor belt.

In one embodiment of the method according to the present invention, in step (d) the said dried sugar-cane bagasse is fed continuously to the pelletizer by spouts to the conditioner of the pelletizer (12).

In a preferred embodiment of the method of the present invention, said spouts in step (d) are sloping spouts with adjustable gates and magnetic plates that withhold any ferrous impurities that have not been collected before in order to prevent any damage to the pelletizers.

In a more preferred embodiment of the method of the present invention, the bagasse is fed by the spout to the conditioner of the pelletizer (12), which is a spinning cylindral metal box with about 450mm diameter, fitted with wings and which loosens the bagasse and feeds the pelletizer. This machine is driven by a 5hp motor. In said conditioner, the bagasse receives an injection of saturated steam (VS) which helps pelletization and adjusts humidity to levels as above.

In one embodiment of the method according to the present invention, the sugar-cane bagasse enters the pelletizer's pressing system in step (d).

In a preferred embodiment of the method of the present invention, said pelletizer's pressing system is driven by a motor of about 125 hp at about 1750 rpm.

In another preferred embodiment of the method of the present invention, said pelletizer's pressing system has a mold rotating at about 360 rpm, and two pressing rollers and regulators.

In a more preferred embodiment of the method of the present invention, said pelletizer comprises a cast-steel case, holding the primary shafts, the hollow mold shafts, the compacting rollers and the motor itself, whereas the main shaft fixes the two compacting rollers and the scrapers.

In a particular preferred embodiment of the method of the present invention said mold is affixed to the hollow rotating shaft, driven by gears and an electric motor with power varying from about 100 hp to about 400 hp, at about 220 rpm to about 420 rpm, depending on the type of raw material the pelletizer is processing.

In another preferred embodiment of the method of the present invention said mold comprises a mold diameter of about 520 to about 820 mm, a diameter of the mold holes of about 4.76 mm to about 19.05 mm (3/16" to 3/4"), a width of the track of the molds used of about 100 to about 220 mm, and a number of holes in the molds used of about 860 to about 4600 holes.

In a further preferred embodiment of the method of the present invention said compacting rollers having a diameter ranging from about 140 mm to about 220 mm, an eccentric shaft, and a metal shield pressing. They also feature a device with adjusting regulators that enable greater roller pressure on the mold and thus increase the pressure on the unprocessed sugar-cane bagasse, which ensures more consisting compacting of the pellets and consequently greater density.

In a particular preferred embodiment of the method of the present invention said metal pressing shield of the compacting roller has thickness ranging from about 15 mm to about 40 mm and grooves about 2 to about 5 mm deep and about 2 to about 5mm wide, spaced apart about 8 to about 12 mm. In contact with the unprocessed sugar-cane bagasse, these grooves ensure better traction and improve pressing against the mold.

In another particular preferred embodiment of the method of the present invention, said mold is a metal ring with a flange for fixing on the hollow shaft and a surface with various holes, whereas these holes can be of various sizes, as demanded by the method.

In a further preferred embodiment of the method of the present invention, the unprocessed sugar-cane bagasse is pelletized, by using a 650 mm diameter mold with 890 9.525 mm (3/8") holes. Said mold is 125 mm wide and has an actual thickness of 30 mm and an additional thickness of 30 mm for relief. In the relief thickness, the diameter is 1-2 mm larger than the hole in the actual thickness. This mold system is called a relief mold, because it has a compacting chamber in the diameter desirable and the remaining thickness of the mold has a larger diameter, in which the compacted pellets are released from the actual pressing chamber, without the pressure of the hole walls, thus ensuring greater flow in the mold.

In one embodiment of the method according to the present invention, following step (d) the sugar-cane bagasse pellets are removed from the pelletizers.

In a preferred embodiment of the method of the present invention the sugar-cane bagasse pellets are removed by a variable-speed cleated or similar type conveyor belt after step (d).

In another embodiment of the method according to the present invention, in step (e) the sugar-cane bagasse pellets are sorted according to their size.

In a preferred embodiment of the method of the present invention the sugar-cane bagasse pellets are sorted by a vibrating sifter (14) in step (e).

In a more preferred embodiment of the method of the present invention any material that is rejected in the sifter in step (e), together with any excess dried sugar-cane bagasse from the feeding conveyor belt (11) is returned to the feed box to be reused in the method.

In a particular preferred embodiment of the method of the present invention, in step (e) the sugar-cane bagasse pellets are cooled down to room temperature of about 30 to about 40 °C.

In a more particular preferred embodiment of the method of the present invention said the sugar-cane bagasse pellets after the pellets are sorted, go to the cleated conveyor belt cooler (16) with a perforated screen and an exhaust system featuring a powder retention cyclone or similar device (17). This removes any solid material, which goes back to the pelletization method.

In another preferred embodiment of the method of the present invention said cooler consists of two cleated conveyor belts with a perforated screen. Above it there is an exhaust system that aspires all solid particles (dust) from the air and cools the pellets to room temperature of between 20 to 40 °C.

In one embodiment of the method according to the present invention the final sugar-cane bagasse pellets, with a humidity ranging from about 9 to about 13 % and a density between about 0.55 to about 0.60 g/cm³ are taken to a storage system in step (f) by a conveyor belt (18).

In a preferred embodiment of the method of the present invention, in step (f) said final sugar-cane bagasse pellets are stored in big bags or silos (19 and 20).

In another preferred embodiment of the method of the present invention said storage system requires airtight facilities to prevent environmental damage from the dust formed during handling and storage.

In one embodiment the method according to the present invention is selected from fully automated and/or contiguous processes.

The other object of the invention is solved by providing a device for converting unprocessed sugar-cane bagasse into combustible compressed sugar-cane bagasse pellets, wherein said device comprises:
(a) a continuous feeding unit,
(b) a cleaning unit,
(c) a drying unit,
(d) a pelletization unit,
(e) a sorting and drying unit, and, optionally and preferably,
(f) a storing unit.

In one embodiment of the device according to the present invention said unit (a) comprises a cleated or similar type conveyor belt (1), a feedbox (2), and a sprayer (3).

In a preferred embodiment of the device of the present invention said feed box can hold a 15-minute supply and has a cleated or similar type conveyor belt.

In a particular preferred embodiment of the device of the present invention said feed box is a rectangular flat-wall and flat bottom feedbox.

In one embodiment of the device according to the present invention said unit (b) comprises a cleated or similar type conveyor belt (4), an electromagnet (5), and a di-stone (6).

In a preferred embodiment of the device of the present invention said electromagnet has a minimum magnetic capacity of about 1500 gauss.

In a particular preferred embodiment of the device of the present invention said di-stone is a rotating machine consisting of about 5 to 8 perpendicular axes with star-shaped knives that counter rotate.

In one embodiment of the device according to the present invention said unit (c) comprises a cleated or similar type conveyor belt (7), a spinning tube dryer (8), an insufflating system (9), and an exhaust system featuring cyclones (10).

In a preferred embodiment of the device of the present invention said spinning tube dryer is fitted with deflectors positioned at an angle of about 45 ° attached to the tube bundles, whereas the minimum spacing between the tubes is about 75 mm.

In one embodiment of the device according to the present invention said unit (d) comprises a cleated or similar type conveyor belt (11), sloping spouts, conditioner of the pelletizer, the pelletizers (12), and a variable-speed cleated or similar type conveyor belt (13).

In a preferred embodiment of the device of the present invention said sloping spouts have adjustable gates and magnetic plates.

In another preferred embodiment of the device of the present invention said conditioner is a spinning cylindrical metal box with a diameter of about 450 mm, fitted with wings and driven by a motor of about 5 hp.

In another preferred embodiment of the device of the present invention said pelletizer comprises a pressing system, a cast-steel case, holding the primary shafts, the hollow mold shafts, the compacting rollers and the motor itself, whereas the main shaft fixes the two compacting rollers and the scrapers.

In a particular preferred embodiment of the device of the present invention said pelletizer's pressing system has a mold rotating at about 360 rpm and two pressing rollers and regulators and is driven by a motor of about 125 hp at about 1750 rpm.

In another particular preferred embodiment of the device of the present invention said mold is fixed at the hollow rotating shaft, driven by gears and an electric motor with power varying from about 100 hp to 400 hp, at about 220 rpm to 420 rpm depending on the type of raw material the pelletizer is processing.

In a further particular preferred embodiment of the device of the present invention said mold is a metal ring with a flange for fixing on the hollow shaft and a surface with various holes, whereas these holes can be of various sizes, as demanded by the method.

In another particular preferred embodiment of the device of the present invention said mold comprises a mold diameter of about 520 to about 820 mm, a diameter of the mold holes of about 4.76 mm to about 19.05 mm (3/16" to 3/4"), a width of the track of the molds used of about 100 to about 220 mm, and a number of holes in the molds used of about 860 to about 4600 holes.

In another particular preferred embodiment of the device of the present invention said compacting rollers having a diameter ranging from about 140 mm to about 220 mm, an eccentric shaft, a metal shield pressing, and a device with adjusting regulators.

In another particular preferred embodiment of the device of the present invention said metal pressing shield of the compacting roller has thickness ranging from about15mm to about 40mm and grooves about 2 to about 5 mm deep and about 2 to about 5 mm wide, spaced about 8 to about 12 mm apart.

In one embodiment of the device according to the present invention said unit (e) comprises a variable-speed cleated or similar type conveyor belt (13), a vibrating sifter (14), a cooler (16) with a pleated conveyor belt with a perforated screen, and an exhaust system with a cyclone (17).

In one embodiment of the device according to the present invention said unit (f) comprises a cleated or similar type conveyor belt (18), big bag packing system (19) or silos (20).

In one embodiment of the device according to the present invention said unit (d) and (e) are connected to unit (b) via a cleated or similar type conveyor belt (15).

In one embodiment of the device according to the present invention said units are integrated into one system.

In another preferred aspect thereof, the present invention relates to pelletized unprocessed sugar-cane bagasse, obtainable according to a method as above according to the present invention.

Preferred is a pelletized unprocessed sugar-cane bagasse according to the present invention, wherein said bagasse has an upper calorific content of about 4,500 to about 5,500 kcal/kg, a lower calorific content of about 3,500 to about 4,500 kcal/kg, a density of about 500 to about 600 kg dry matter/m³, and a humidity of about 10 % to about 15 %. Further preferred is a pelletized unprocessed sugar-cane bagasse according to the present invention, wherein said bagasse is further blended with coal. This will even further improve the combustion properties of the inventive pellets.

In one embodiment of the present invention the unprocessed sugar-cane bagasse pellets obtained by the method according to the present invention are used as renewable biomass to generate energy.

In a further embodiment of the present invention the unprocessed sugar-cane bagasse pellets are used as biofuel in the power generation sector.

In one embodiment of the present invention unprocessed sugar-cane bagasse pellets are blended with coal.

It should be noted, that the term "about" in this description means ± 10 %, if not indicated otherwise.

It should be understood that the features of the invention as disclosed and described herein can be used not only in the respective combination as indicated, but also in a singular fashion without departing from the intended scope of the present invention.

The invention will now be described in more detail by reference to the following Figures, and the Examples. The following examples are provided for illustrative purposes only and are not intended to limit the invention.
Figure 1 is a flow chart of the method for pelletizing unprocessed sugar-cane bagasse. This flow chart shows each single step of the converting from unprocessed sugar-cane bagasse into unprocessed sugar-cane bagasse pellets to the storage of the final product.

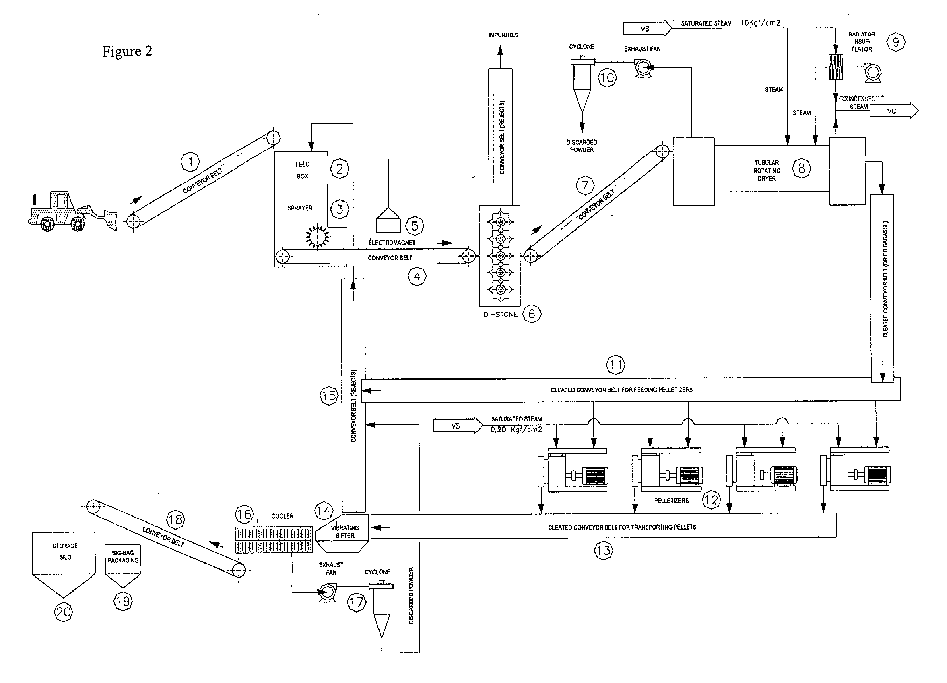

Figure 2 is a flow diagram of the method for pelletizing unprocessed sugar-cane bagasse. This flow diagram shows each single step of the converting from unprocessed sugar-cane bagasse into unprocessed sugar-cane bagasse pellets to the storage of the final product.

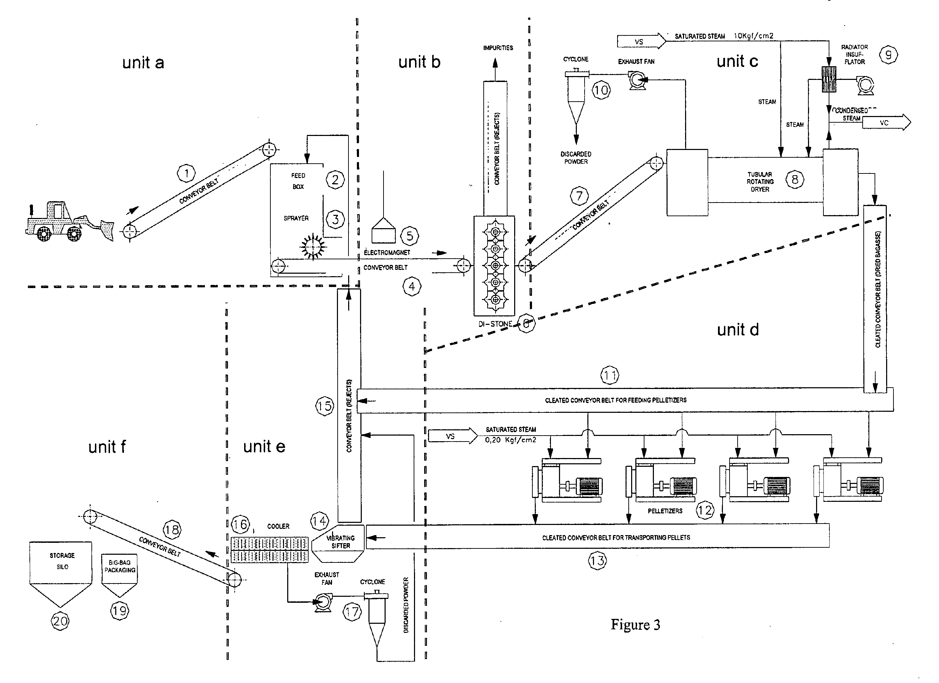

Figure 3 is a flow diagram of the device for pelletizing unprocessed sugar-cane bagasse. This flow diagram shows each unit of the device for the production of unprocessed sugar-cane bagasse pellets, comprising a continuous feeding unit (a), a cleaning unit (b), a drying unit (c), a pelletization unit (d), a sorting and drying unit (e), and a storing unit.

### EXAMPLE

The method and the setup of the device as claimed in the present application has been achieved through tests at our pilot pelletization plant, using the following equipment:
- One carbon steel grain hopper to receive and store raw material, with 9m³ capacity.
- One screw transporter, with a 10-12 metric ton/hour capacity, driven by a 5hp at 1,750rpm motor, to feed the vibrating sifter.
- One vibrating sifter, with a 10-12 metric ton/hour capacity, driven by a 5hp at 1,750rpm motor, to separate the unprocessed sugar-cane bagasse.
- One screw transporter, with a 10-12 metric ton/hour capacity, driven by a 5hp at 1,750 rpm motor, to feed the dryer.
- One spinning tube dryer, with a 10-12 metric ton/hour capacity, driven by a 7.5 hp at 1,750 rpm motor.
- One hot-gas exhaust, with a 1,000m³/hour capacity, driven by a 25hp at 1,750 rpm motor.
- One cyclone to separate dust, with a 5 metric ton/hour capacity.
- One fan to insufflate hot air, with a 650m³/hour capacity, driven by a 7.5hp at 1,750rpm motor.
- One steam radiator, with a 50,000kcal/hour capacity.
- One internal dryer screw transporter, with a 10-12 metric ton/hour capacity, driven by a 0.75hp at 1,750rpm motor.
- One dryer outlet screw transporter, with a 10-12 metric ton/hour capacity, driven by a 5hp at 1,750rpm motor.
- One pelletizer feeder screw transporter, with a 10-12 metric ton/hour capacity, driven by a 5hp at 1,750rpm motor.
- Three pelletizers, with a 1.5 metric ton/hour capacity each, driven by 125hp at 1,750rpm motors.
- One pelletizer, with a 5 metric ton/hour capacity, driven by a 250hp at 1,750rpm motor.
- Four pelletizer conditioners, with a 3 metric ton/hour capacity each, driven by 5hp at 1,750rpm motors.
- One pellet conveyor belt, with a 10-12 metric ton/hour capacity, driven by a 5hp at 1750rpm motor.
- One vibrating sifter, with a 2.5 metric ton/hour capacity, driven by a 3hp at 1,750rpm motor.
- One screw transporter for vibrating-sifter rejects, with a 1 metric ton/hour capacity, driven by a 0.75hp at 1,750rpm motor.
- Two pellet coolers, with a 2.5 metric ton/hour capacity, driven by 1hp at 1750rpm motors.
- Two cooler drivers with 3hp at 1,750rpm motors.
- One pellet conveyor belt, with a 5 metric ton/hour capacity, driven by a 3hp at 1750rpm motor.
- One big bag loading system.
- One set of carbon steel tubes used to feed steam to the dryer and removed condensed matter which is send to the boiler thermal air remover.

### Working example:

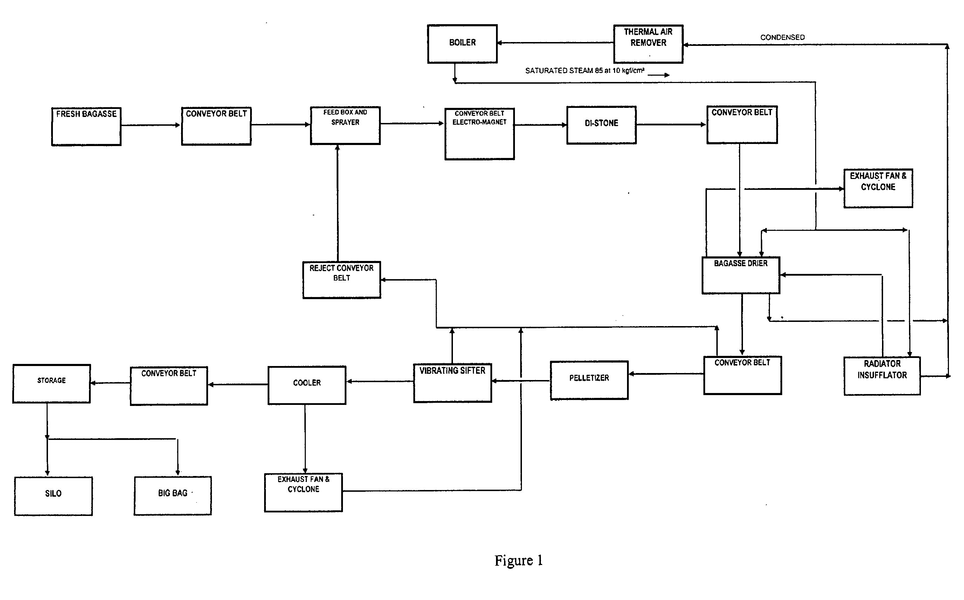

With reference to Figure 1 and the listing of material as above, sugar-cane bagasse is first continuously fed into a feed box (2), and loosened and flattened by a sprayer (3). The feed box can hold a 15-minute supply in relation to the plant output capacity and has a cleated type conveyor belt to transport the unprocessed sugar-cane bagasse. Then, ferrous material and impurities of the unprocessed sugar-cane bagasse are removed by an electromagnet (5) with a minimum magnetic capacity of 1,500 gauss, and any other impurities are removed by a di-stone (6) consisting of 5 to 8 perpendicular axes with star-shaped knives that counter rotate.

Then, the unprocessed sugar-cane bagasse is dried in a spinning tube dryer (8) using a system of bundled tubes conveying saturated steam at 9 kgf/cm², at a temperature of about 175°C inside the tube, providing indirect contact with the product in the tube's external wall (i.e. the steam inside the pipes dry without contact with the bagasse, whilst the steam flow heating the internal surface of the pipes and bagasse has contact with the external surface of the pipes). This results in a temperature of about 138°C. The spinning tube dryer is fitted with deflectors positioned at about 45° attached to the tube bundles. The unprocessed sugar-cane bagasse is then cooled down to approximately room temperature.

The unprocessed sugar-cane bagasse now remains inside the spinning tube dryer for 12 minutes, at 4 rpm using approx. 2 to 3 metric tons of steam per hour. After leaving the tubular bundles, the bagasse is insufflated with hot air by a duct coming from a heat radiator (9) fed by saturated steam (VS). This operation heats the gases in counter flow with the bagasse, thus helping the drying method and preventing any accumulation of solid residues (powder) inside the dryer. The hot and humid gases are removed on the opposite side of the entrance of the dryer by a duct with forced exhaust (10), and sent to a cyclone, or similar equipment, where the solid particles (powder) are separated and sent to be burned by the boiler.

The now dried sugar-cane bagasse with a humidity varying between 13 to 20 % is then taken to the pelletizers by a cleated type conveyor belt and fed continuously to the pelletizer by spouts to the conditioner of the pelletizer (12). The spouts are sloping spouts with adjustable gates and magnetic plates that withhold any ferrous impurities that have not been collected before to prevent any damage to the pelletizer.

The conditioner of the pelletizer (12), which is a spinning cylindral metal box with 450 mm diameter, is fitted with wings and now loosens the bagasse and feeds it to the pelletizer. The machine is driven by a 5hp motor. In this conditioner, the bagasse receives an injection of saturated steam (VS) which helps pelletization and adjusts humidity.

Then, the sugar-cane bagasse enters the pelletizer's pressing system which is driven by a motor of 125 hp at about 1750 rpm. Said pelletizer's pressing system has a mold rotating at about 360 rpm and two pressing rollers and regulators, whereas the pelletizer comprises a cast-steel, holding the primary shafts, the hollow mold shafts, the compacting rollers and the motor itself, whereas the main shaft fixes the two compacting rollers and the scrapers. The mold is fixed at the hollow rotating shaft, driven by gears and an electric motor with power varying from 100hp to 400hp, at 220rpm to 420rpm, depending on the type of raw material the pelletizer is processing. Furthermore, the mold comprises a mold diameter of 650 mm, with a diameter of the mold holes of about 9.53 mm (3/8"). and a width of the track of the molds of 125 mm, and a number of holes in the molds used of 890.

The compacting rollers have a diameter of 125 mm, an eccentric shaft, a metal shield pressing, and a device with adjusting regulators. The adjusting regulators enable greater roller pressure on the mold and thus increase the pressure on the unprocessed sugar-cane bagasse, which ensures more consisting compacting of the pellets and consequently greater density. The metal pressing shield of the compacting roller has thickness of 30 mm and grooves 3 mm deep and 3 mm wide, spaced 10 mm apart. In contact with the unprocessed sugar-cane bagasse, these grooves ensure better traction and improve pressing against the mold.

Then, the sugar-cane bagasse pellets are removed from the pelletizers by a variable-speed cleated type conveyor belt and subsequently sorted by size by a vibrating sifter. Any material rejected at the sifter, together with any excess dried sugar-cane bagasse from the feeding conveyor belt (11) is returned back to the feed box to be reused in the process.

The sugar-cane bagasse pellets are then cooled down to room temperature of approx. 30 °C. After the pellets are sorted they are transported by a cleated conveyor belt cooler (16) having a perforated screen and an exhaust system featuring a powder retention cyclone device (17). This removes any solid material, which goes back to the pelletization method. Above the system, there is an exhaust system that aspires all solid particles (dust) from the air and cools the pellets to room temperature, i.e. approx. 30 °C.

The final sugar-cane bagasse pellets, having a humidity ranging from about 9 to about 13% and a density between about 0.55 to about 0.60 g/cm³ are taken to a storage system by a conveyor belt (18). The final sugar-cane bagasse pellets are then suitably stored in big bags before further transport thereof.

### Listing of reference numerals

- 1: cleated or similar type conveyor belt
- 2: feed box
- 3: sprayer
- 4: cleated or similar type conveyor belt
- 5: electromagnet
- 6: di-stone
- 7: cleated or similar type conveyor belt
- 8: spinning tube dryer
- 9: insufflating system
- 10: exhaust system featuring cyclone
- 11: cleated or similar type conveyor belt
- 12: pelletizer
- 13: variable-speed cleated or similar type conveyor belt
- 14: vibrating sifter
- 15: cleated or similar type conveyor belt
- 16: cooler
- 17: exhaust system with a cyclone
- 18: cleated or similar type conveyor belt
- 19: big bag packing system
- 20: storage silos

## Claims

1. A method for pelletizing unprocessed sugar-cane bagasse in an industrial scale, wherein said method comprises the following steps:
(a) providing and feeding of unprocessed sugar-cane bagasse into said method,
(b) cleaning of said unprocessed sugar-cane bagasse,
(c) drying of said cleaned unprocessed sugar-cane bagasse,
(d) pelletization of said dried sugar-cane bagasse, and
(e) sorting and drying of said pelletized sugar-cane bagasse.

2. The method according to claim 1, wherein in step (a) unprocessed sugar-cane bagasse is continuously fed into the method while said bagasse is loosened and flattened.

3. The method according to claim 1 or 2, wherein in step (b) ferrous material and impurities are removed from the unprocessed sugar-cane bagasse.

4. The method according to any of the preceding claims, wherein in step (c) said unprocessed sugar-cane bagasse is dried using saturated steam.

5. The method according to claim 4, wherein in step (c) after the bagasse leaves the tubular bundles, it is insufflated in counter flow with hot air by a duct coming from a heat radiator fed by saturated steam (VS) and/or wherein in step (c) the hot and humid gases are removed on the opposite side of the entrance of the dryer by a duct with forced exhaust, and sent to a cyclone, or similar equipment, where the solid particles (powder) are separated and sent to be burned by the boiler.

6. The method according to any of the preceding claims, wherein after step (d) the sugar-cane bagasse pellets are removed from the pelletizers, in particular by a variable-speed cleated or similar type conveyor belt.

7. The method according to any of the preceding claims, wherein in step (e) the sugar-cane bagasse pellets are sorted according to their size, and/or in step (e) any rejected material at the sifter, together with any excess with excess dried sugar-cane bagasse from the feeding conveyor belt is returned to the feed box to be reused in said method.

8. The method according to any of the preceding claims, further comprising storing of the dried sugar-cane bagasse pellets in step (f).

9. The method according to any of the preceding claims, wherein said method is a fully automated and/or continuous method.

10. A device for converting unprocessed sugar-cane bagasse into combustible compressed sugar-cane bagasse pellets by a method according to any of clams 1 to 9, wherein said device comprises:
(a) a continuous feeding unit,
(b) a cleaning unit,
(c) a drying unit,
(d) a pelletization unit, and
(e) a sorting and drying unit, and,optionally
(f) a storing unit

11. Pelletized unprocessed sugar-cane bagasse, obtainable according to any of claims 1 to 9.

12. Pelletized unprocessed sugar-cane bagasse according to claim 11, wherein said bagasse has an upper calorific content of about 4,500 to about 5,500 kcal/kg, a lower calorific content of about 3,500 to about 4,500 kcal/kg, a density of about 500 to about 600 kg dry matter/m³, and a humidity of about 10 % to about 15 %.

13. Pelletized unprocessed sugar-cane bagasse according to claim 11 or 12, wherein said bagasse is further blended with coal.

14. Use of unprocessed sugar-cane bagasse pellets according to any of claims 11 to 13, as renewable biomass to generate energy and/or as biofuel in the power generation sector.
